(19)

**Europäisches Patentamt**
**European Patent Office**
**Office européen des brevets**

(11) **EP 4 585 642 A1**

(12) **EUROPEAN PATENT APPLICATION**

(43) Date of publication:
16.07.2025  Bulletin 2025/29

(21) Application number: 25151093.9

(22) Date of filing: 10.01.2025

(51) International Patent Classification (IPC):
*C08L 23/0869* (2025.01)    *C09D 123/08* (2006.01)

(52) Cooperative Patent Classification (CPC):
(C-Sets available)
C08L 23/0869; C09D 123/0869          (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **11.01.2024  KR 20240004728**

(71) Applicants:
• **SK innovation Co., Ltd.**
  **Seoul 03188 (KR)**
• **SK Geo Centric Co., Ltd.**
  **Seoul 03188 (KR)**

(72) Inventors:
• **WOO, Dong Hyun**
  **34124 Daejeon (KR)**
• **SON, Sang Ha**
  **34124 Daejeon (KR)**
• **CHOI, Ji Hyeon**
  **34124 Daejeon (KR)**
• **HWANG, Bu Yeon**
  **34124 Daejeon (KR)**

(74) Representative: **Thoma, Michael**
  **Lorenz Seidler Gossel**
  **Rechtsanwälte Patentanwälte**
  **Partnerschaft mbB**
  **Widenmayerstraße 23**
  **80538 München (DE)**

(54) **AQUEOUS DISPERSION COMPOSITION INCLUDING ETHYLENE-BASED COPOLYMER**

(57)    An aqueous dispersion composition according to embodiments of the present disclosure includes a first ethylene-based copolymer having a melting temperature of 84°C or higher and a second ethylene-based copolymer having a melting temperature of less than 80°C, wherein a content of the second ethylene-based copolymer is 70 wt% to 90 wt% based on a total weight of the first ethylene-based copolymer and the second ethylene-based copolymer, and a total content of the first ethylene-based copolymer and the second ethylene-based copolymer is 50 wt% or more based on a total solid content weight of the aqueous dispersion composition.

EP 4 585 642 A1

(52) Cooperative Patent Classification (CPC): (Cont.)

C-Sets
**C08L 23/0869, C08L 23/0869;**
**C09D 123/0869, C08L 23/0869**

**Description**

BACKGROUND

1. Field of the Invention

The embodiments of the present disclosure relate generally to an aqueous dispersion composition including an ethylene-based copolymer.

2. Description of the Related Art

An ethylene-based copolymer, such as, for example, ethylene-(meth)acrylic acid copolymer is used in various applications such as a sealing material, an adhesive, a packing material, an optical film and the like. For example, the ethylene-based copolymer may be prepared as an aqueous dispersion liquid to be used for an application of forming a coating film or an adhesive layer. The aqueous dispersion liquid may be used for applying it to a surface of a polymer film, a paper sheet, a metal foil, fabrics, etc., and then forming an adhesive or fusion layer by applying heat.

An ethylene-carboxylic acid copolymer includes acid groups in a copolymer structure, thereby having adhesive properties on their own. Therefore, a blocking phenomenon, in which the dispersion liquid is attached to other media such as a vessel, may occur during storage thereof. When an additive such as an anti-blocking agent is included in the dispersion liquid to resolve the blocking phenomenon, an adhesive force of the dispersion liquid and mechanical properties of the adhesive layer formed therefrom may be decreased.

Considering the above-described circumstances, a design of an aqueous dispersion liquid having improved adhesive reliability is required.

SUMMARY

An embodiment of the present disclosure provides an aqueous dispersion composition including an ethylene-based copolymer having improved adhesive reliability.

According to an embodiment of the present disclosure, there is provided an aqueous dispersion composition including a first ethylene-based copolymer having a melting temperature of 84°C or higher; and a second ethylene-based copolymer having a melting temperature of less than 80°C, wherein a content of the second ethylene-based copolymer is 70 wt% to 90 wt% based on a total weight of the first ethylene-based copolymer and the second ethylene-based copolymer, and a total content of the first ethylene-based copolymer and the second ethylene-based copolymer is 50 wt% or more based on a total solid content weight of the aqueous dispersion composition.

In an embodiment, the first ethylene-based copolymer may include an ethylene-(meth)acrylic acid copolymer or an ethylene-maleic anhydride-alkylacrylate copolymer.

In an embodiment, a ratio or content of (meth)acrylic acid or maleic anhydride in the first ethylene-based copolymer may be 10 wt% or less based on a total weight of the first ethylene-based copolymer.

In an embodiment, the second ethylene-based copolymer may include an ethylene-(meth)acrylic acid copolymer.

In an embodiment, a ratio or content of (meth)acrylic acid in the second ethylene-based copolymer may be 19 wt% or more based on a total weight of the second ethylene-based copolymer.

In an embodiment, the first ethylene-based copolymer may have a melting temperature of 90°C to 110°C which is measured by differential scanning calorimeter (DSC).

In an embodiment, the second ethylene-based copolymer may have a melting temperature of 65°C or more and less than 80°C which is measured by differential scanning calorimeter (DSC).

In an embodiment, the first ethylene-based copolymer may have a melt flow index (MFI) of 5 g/10 min to 250 g/10 min which is measured under conditions of 190°C and 2.16 kg.

In an embodiment, the second ethylene-based copolymer may have a melt flow index (MFI) of 250 g/10 min to 1,500 g/10 min which is measured under conditions of 190°C and 2.16 kg.

In an embodiment, a density of the second ethylene-based copolymer may be greater than a density of the first ethylene-based copolymer.

In an embodiment, a weight average molecular weight of the first ethylene-based copolymer may be greater than a weight average molecular weight of the second ethylene-based copolymer.

In an embodiment, the aqueous dispersion composition may further include a neutralizing agent and an aqueous dispersion medium.

In an embodiment, the neutralizing agent may include at least one of an organic amine, $NH_4OH$, KOH, NaOH, CsOH and LiOH.

In an embodiment, the aqueous dispersion composition may include a solid content of 10% by weight to 30% by weight.

In an embodiment, the aqueous dispersion composition may have a viscosity of 100 cP to 10,000 cP at 25°C.

According to various embodiments, the aqueous dispersion composition may include heterogeneous ethylene-based copolymers having different melting temperatures from each other. A ratio of the contents of the ethylene-based copolymers may be adjusted to a predetermined range. Accordingly, the blocking phenomenon during storage may be reduced, and the adhesive force may be increased together while improving barrier properties and heat resistance.

The ethylene-based copolymers may be included in a predetermined amount or more in the solid content of the aqueous dispersion composition. Accordingly, the mechanical properties, water resistance, and heat resistance of a coating film or layer with the inventive aqueous dispersion composition may be improved while also improving the adhesive force and anti-blocking properties of the coating film or layer.

## BRIEF DESCRIPTION OF THE DRAWINGS

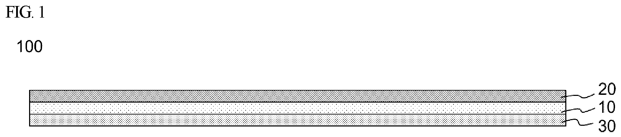

The above and other objects, features and advantages of the embodiments of the present disclosure will be more clearly understood from the following detailed description taken in conjunction with the accompanying drawing, in which: FIG. 1 is a schematic cross-sectional view illustrating a coating film and a multilayer film according to embodiments of the present disclosure.

## DETAILED DESCRIPTION

An aqueous dispersion composition according to embodiments of the present disclosure may include an ethylene-based copolymer and an aqueous dispersion medium. The aqueous dispersion medium in an embodiment may be water. The aqueous dispersion composition may in addition to water may include a neutralizing agent.

The term "(meth)acrylic acid" as used herein is used to refer both to acrylic acid and methacrylic acid. The term "(meth)acrylate" as used herein is used to refer both to acrylate and methacrylate.

Hereinafter, embodiments of the present disclosure will be described in detail.

The above-described aqueous dispersion composition may include heterogeneous ethylene-based copolymers having different melting temperatures (Tm) from each other.

According to some embodiments, the ethylene-based copolymer may include a first ethylene-based copolymer having a melting temperature of 84°C or higher and a second ethylene-based copolymer having a melting temperature of less than 80°C.

The melting temperature (Tm) may be measured by a differential scanning calorimeter (DSC). The melting temperature (Tm) of the ethylene-based copolymer measured by the differential scanning calorimeter (DSC) is a temperature at which the ethylene-based copolymer is changed from a solid state to a flowable liquid state, and may represent a temperature at which crystallinity disappears in a partially crystalline polymer.

The dispersibility of the ethylene-based copolymer in the aqueous dispersion composition may be increased by the second ethylene-based copolymer, and the flowability of the aqueous dispersion composition may be improved, thereby enhancing application characteristics and coating uniformity.

However, due to the low melting temperature of the second ethylene-based copolymer, the heat resistance and barrier properties of the coating layer formed of the second ethylene-based copolymer may be decreased.

The first ethylene-based copolymer may complement the barrier properties and heat resistance. Therefore, thermal and chemical stabilities of the coating layer may be improved by the first ethylene-based copolymer, and mechanical properties and barrier properties may be further improved.

According to some embodiments, the first ethylene-based copolymer may include an ethylene-(meth)acrylic acid copolymer or an ethylene-maleic anhydride-alkyl(meth)acrylate copolymer.

In an embodiment, the alkyl(meth)acrylate may include an alkyl group having 1 to 8 carbon atoms. For example, the alkyl(meth)acrylate may include methyl(meth)acrylate, ethyl(meth)acrylate, butyl(meth)acrylate, hexyl(meth)acrylate, 2-ethylhexyl(meth)acrylate and the like.

According to some embodiments, a ratio or content of the acidic monomer (e.g., the (meth)acrylic acid and/or the maleic anhydride) in the first ethylene-based copolymer may be 15% by weight ("wt%") or less based on a total weight of the first ethylene-based copolymer. For example, a content of the (meth)acrylic acid and/or the maleic anhydride-derived unit(s) may be 15 wt% or less, or 10 wt% or less based on the total weight of the first ethylene-based copolymer.

According to some embodiments, the second ethylene-based copolymer may include an ethylene-(meth)acrylic acid copolymer.

According to some embodiments, the ratio or content of the acidic monomer (e.g., (meth)acrylic acid) in the second ethylene-based copolymer may be 19 wt% or more, based on the total weight of the second ethylene-based copolymer. For example, the content of (meth)acrylic acid-derived units may be 19 wt% or more of the total weight of the second ethylene-based copolymer. In this context, (meth)acrylic acid-derived units may refer to the parts of the copolymer that are formed from either the acrylic acid or the methacrylic acid. When these acids are used as monomers in the polymerization process, they become chemically incorporated into the polymer chain, creating "derived units." Hence, the term (meth)acrylic acid-derived units as used herein refers to the segments of the polymer chain that originated from the acrylic acid or the methacrylic acid molecules.

The dispersibility of the ethylene-based copolymer in the aqueous dispersion composition may be further enhanced by the acid groups of the acidic monomers included in the second ethylene-based copolymer. In addition, the water resistance, adhesion and adhesive force of the coating layer may be improved due to an interaction between the acid groups and external media. The term "external media" as used herein may refer to various substances or materials that the coating layer may contact in its intended use environment. This, for example, could include water, other liquids, chemicals, or even air and humidity. The acid groups in the coating layer can interact with these external media, enhancing properties like water resistance, adhesion, and adhesive force.

However, a blocking phenomenon, in which the dispersion liquid is attached to other media such as a vessel, may be caused by the acid groups of the second ethylene-based copolymer during storage thereof According to some embodiments, the blocking phenomenon may be suppressed, and the anti-blocking properties of the aqueous dispersion composition may be improved by the first ethylene-based copolymer.

According to some embodiments, the content of the second ethylene-based copolymer may be 70 wt% to 90 wt% based on a total weight of the first ethylene-based copolymer and the second ethylene-based copolymer. For example, the weight ratio of the first ethylene-based copolymer to the second ethylene-based copolymer can range from 1:9 to 3:7

If the content of the second ethylene-based copolymer is less than 70 wt%, the blocking phenomenon of the aqueous dispersion composition may be increased, and the storage stability of the aqueous dispersion composition, as well as the heat resistance and high temperature water resistance of the coating layer formed from the aqueous dispersion composition may be decreased.

If the content of the second ethylene-based copolymer exceeds 90 wt%, the dispersibility, flowability, and application characteristics of the aqueous dispersion composition may be decreased, as well as the coating uniformity, water resistance, adhesive force and adhesion of the coating layer may be decreased.

In an embodiment, the content of the second ethylene-based copolymer may be 72 wt% to 88 wt%, 73 wt% to 87 wt%, 75 wt% to 87 wt%, or 75 wt% to 85 wt%. Within the above ranges, the anti-blocking characteristics may be secured without decreasing the dispersibility and coating characteristics of the aqueous dispersion composition, and the barrier characteristics and heat resistance of the coating layer may be further improved.

According to some embodiments, the content of the ethylene-based copolymer may be 50 wt% or more based on a total solid content weight of the aqueous dispersion composition. For example, the total content of the first ethylene-based copolymer and the second ethylene-based copolymer may be 50 wt% to 99.9 wt%, 60 wt% to 99 wt%, 70 wt% to 95 wt%, or 70 wt% to 90 wt% based on the total solid content weight of the aqueous dispersion composition.

The ethylene-based copolymer may be included at a high concentration to function as a base polymer or base resin, and the coating properties of the aqueous dispersion composition, as well as the thermal and chemical stabilities of the coating layer may be further improved.

In an embodiment, the content of the second ethylene-based copolymer may be 50 wt% or more based on the total solid content weight of the aqueous dispersion composition. Accordingly, the heat resistance, barrier properties, and mechanical properties of the coating layer formed of the aqueous dispersion composition may be further improved.

In an embodiment, the first ethylene-based copolymer may have a melting temperature of 84°C to 110°C, 90°C to 110°C, 95°C to 105°C, or 95°C to 102°C. Within the above ranges, the blocking phenomenon in the aqueous dispersion composition may be further reduced, and flowability of the aqueous dispersion composition and heat resistance of the coating layer may be further improved.

In an embodiment, the melting temperature of the second ethylene-based copolymer may be 65°C or higher and less than 80°C, 70°C or higher and less than 80°C, 73°C to 79°C, or 75°C to 79°C. Within the above ranges, the dispersibility of the ethylene-based copolymer and the coating properties of the aqueous dispersion composition may be further improved without a rapid decrease in the heat resistance and mechanical properties of the coating layer.

In an embodiment, the ratio or content of the acidic monomer (acrylic acid and/or maleic anhydride) in the first ethylene-based copolymer may be 2 wt% to 15 wt%, 2 wt% to 10 wt%, or 2.5 wt% to 5 wt% based on the total weight of the first ethylene-based copolymer. Within the above ranges, the dispersibility in the aqueous dispersion composition may be improved, and the anti-blocking properties may be further enhanced.

In an embodiment, the ratio or content of the acidic monomer (acrylic acid) in the second ethylene-based copolymer may be 19 wt% to 30 wt%, 19 wt% to 25 wt%, or 20 wt% to 23 wt% based on the total weight of the second ethylene-based copolymer. Within the above ranges, the adhesion and adhesive force of the coating layer to a substrate may be further improved without decreasing the storage stability of the aqueous dispersion composition.

In an embodiment, the solid content may be 10 wt% to 30 wt%, 15 wt% to 30 wt%, or 20 wt% to 30 wt% based on the total weight of the aqueous dispersion composition. Within the above ranges, the flowability and coating uniformity of the aqueous dispersion composition may be improved, and volatile components may be easily removed, thereby further improving the mechanical properties, and the thermal and chemical stabilities of the coating layer. For example, as the solid content of the aqueous dispersion composition is increased, gelation of the ethylene-based copolymer may be promoted, and it may be substantially difficult to adjust the viscosity and coating properties of the aqueous dispersion composition to an appropriate range.

In an embodiment, a melt flow index (MFI) of the second ethylene-based copolymer may be greater than the melt flow index of the first ethylene-based copolymer. The melt flow index (MFI) may be measured under conditions of 190°C and 2.16 kg. For example, the melt flow index may be measured according to the ASTM D1238 standard test method (e.g., ASTM D1238: 2023).

In an embodiment, the first ethylene-based copolymer may have a melt flow index (MFI) of 5 g/10 min to 250 g/10 min, 50 g/10 min to 230 g/10 min, or 100 g/10 min to 230 g/10 min. Within the above ranges, the heat resistance and mechanical strength of the coating layer formed from the aqueous dispersion composition may be further improved.

In an embodiment, the second ethylene-based copolymer may have a melt flow index (MFI) of 250 g/10 min to 1,500 g/10 min, or 250 g/10 min to 1,400 g/10 min, 270 g/10 min to 1,000 g/10 min, or 280 g/10 min to 500 g/10 min. Within the above ranges, the melt flowability of the aqueous dispersion composition may be increased, thereby improving the coating properties.

In an embodiment, a Vicat softening temperature of the first ethylene-based copolymer may be higher than a Vicat softening temperature of the second ethylene-based copolymer. The Vicat softening temperature of the copolymer may be measured according to the ASTMD1525 standard test method.

For example, the first ethylene-based copolymer may have a Vicat softening temperature of 70°C to 95°C, 75°C to 90°C, or 80°C to 90°C. For example, the second ethylene-based copolymer may have a Vicat softening temperature of 50°C or less, 30°C to 50°C, or 35°C to 45°C.

Within the above ranges, the heat resistance, high-temperature water resistance, and high-temperature barrier properties of the coating layer formed of the aqueous dispersion composition may be improved, and shape deformation due to shrinkage, tension, etc. at a high temperature may be suppressed.

In an embodiment, the density of the second ethylene-based copolymer may be greater than the density of the first ethylene-based copolymer. The density of the copolymer may be measured according to the ASTM D792 standard test method.

The second ethylene-based copolymer having a low melting temperature and a high acid value has relatively high density characteristics, such that the blocking phenomenon of the aqueous dispersion composition may be further suppressed, as well as the mechanical properties and strength of the coating layer may be further improved.

In an embodiment, the density of the first ethylene-based copolymer may be 0.920 g/cm$^3$ to 0.940 g/cm$^3$, 0.925 g/cm$^3$ to 0.939 g/cm$^3$, or 0.930 g/cm$^3$ to 0.938 g/cm$^3$. Within the above ranges, the heat resistance and barrier properties of the coating layer may be further enhanced by the first ethylene-based copolymer.

In an embodiment, the density of the second ethylene-based copolymer may be 0.950 g/cm$^3$ to 0.960 g/cm$^3$, 0.952 g/cm$^3$ to 0.959 g/cm$^3$, or 0.955 g/cm$^3$ to 0.959 g/cm$^3$. Within the above ranges, the water dispersibility of the ethylene-based copolymer may be further enhanced, and the coating uniformity and water resistance of the coating layer may be further improved by the second ethylene-based copolymer.

In an embodiment, the ethylene-based copolymer may have a weight average molecular weight (Mw) of 10,000 to 60,000. The weight average molecular weight of the copolymer may be measured by a light scattering method using gel permeation chromatography (GPC).

Within the above ranges, an increase in viscosity of the aqueous dispersion composition may be suppressed, and the mechanical properties and strength of the coating layer formed of the aqueous dispersion composition may be improved.

In an embodiment, the ethylene-based copolymer may have a weight average molecular weight of 10,000 to 50,000, or 20,000 to 45,000. Within the above ranges, the coating properties of the aqueous dispersion composition, the stability and the barrier properties of the coating layer may be further improved.

In an embodiment, the weight average molecular weight of the second ethylene-based copolymer may be less than the weight average molecular weight of the first ethylene-based copolymer. Accordingly, the water resistance of the coating layer may be further improved by the second ethylene-based copolymer, and the barrier properties and mechanical properties may be further enhanced by the first ethylene-based copolymer.

In an embodiment, the first ethylene-based copolymer may have a weight average molecular weight of 25,000 to 55,000, 30,000 to 50,000, or 35,000 to 45,000. Within the above ranges, the mechanical properties, stability and barrier properties of the coating layer formed of the aqueous dispersion composition may be further improved.

In an embodiment, the second ethylene-based copolymer may have a weight average molecular weight of 15,000 to 45,000, 20,000 to 40,000, or 25,000 to 35,000. Within the above ranges, the coating properties of the aqueous dispersion composition may be improved, and the chemical stability and water resistance of the coating layer may be further improved.

Water may be provided as a solvent and/or dispersion medium for the ethylene-based copolymer. The water may include pure water or deionized water.

The neutralizing agent is mixed together with the ethylene-based copolymer, and the aqueous dispersion composition may be provided as a substantially stable viscous fluid by the polymer.

As the neutralizing agent, basic compounds may be used without any particular limitation, including for example, an organic base such as an organic amine compound, etc., or an inorganic base such as ammonium hydroxide ($NH_4OH$), lithium hydroxide (LiOH), sodium hydroxide (NaOH), potassium hydroxide (KOH), cesium hydroxide (CsOH), and the like. These may be used alone or in combination of two or more thereof.

The neutralizing agent may perform an acid-base neutralization reaction with an acid group, such as, for example, a carboxylic acid group included in the ethylene-based copolymer. Accordingly, the dispersibility of the aqueous dispersion composition may be increased and an amount of insoluble components may be decreased.

In an embodiment, triethylamine (TEA) may be used as the neutralizing agent. The triethylamine has high compatibility with the ethylene-based copolymer, such that a neutralizing reaction between the neutralizing agent and the ethylene-based copolymer may be further promoted. Accordingly, the water-dispersibility of the ethylene-based copolymer may be further increased, and the viscosity of the aqueous dispersion composition may be decreased.

In an embodiment, a content of the neutralizing agent may be 1 wt% to 10 wt%, or 2 wt% to 6 wt%, based on the total weight of the aqueous dispersion composition. Within the above ranges, the water-dispersibility of the ethylene-based copolymer may be further improved while suppressing an increase in the viscosity of the aqueous dispersion composition.

In an embodiment, the aqueous dispersion composition may further include an inorganic salt compound for increasing the ion concentration in the mixed solution and reducing the viscosity of the aqueous dispersion liquid composition.

In an embodiment, the inorganic salt compound may include sodium chloride (NaCl), calcium chloride ($CaCl_2$), sodium sulfite ($Na_2SO_3$), sodium sulfate ($Na_2So_4$), sodium carbonate ($Na_2CO_3$), potassium chloride (KCl), trisodium phosphate ($Na_3PO_4$), ammonium chloride ($NH_4Cl$) and the like.

In an embodiment, a content of the inorganic salt compound may be 0.01 wt% to 0.5 wt% based on the total weight of the aqueous dispersion composition. Within the above range, the viscosity of the aqueous dispersion composition may be further decreased while suppressing the formation of a precipitate of the inorganic salt compound.

In an embodiment, the aqueous dispersion composition may have a viscosity of 100 cP to 10,000 cP which is measured at 25°C. Within the above range, the coating properties and coating uniformity of the aqueous dispersion composition may be further improved while suppressing a decrease in the adhesive properties.

For example, the viscosity of the aqueous dispersion composition may be measured using a Brookfield viscometer at 25°C. In an embodiment, the viscosity may be measured by the viscometer using a plate spindle.

In an embodiment, the aqueous dispersion composition may have a viscosity of 100 cP to 5,000 cP, or 100 cP to 2,500 cP which is measured at 25°C. Within the above ranges, the mechanical properties and barrier properties of the coating layer may be further improved while allowing the aqueous dispersion composition to be more uniformly coated.

The aqueous dispersion composition may further include other additives within a range without causing a deterioration in physical properties such as dispersibility and thermal properties through the ethylene-based copolymer. For example, the additive may include an antistatic agent, a surfactant, inorganic particles, and an anti-blocking agent.

The aqueous dispersion composition may be used to coat various objects such as a paper sheet, a resin film, or a metal foil therewith, thereby enhancing the water resistance, heat resistance, crack resistance, insulating properties, and adhesiveness of the objects.

In addition, the aqueous dispersion composition may also be used as a sealing material of packaging films including polyethylene, polypropylene, polymethyl methacrylate, polyethylene terephthalate and the like.

FIG. 1 is a schematic cross-sectional view illustrating a coating film or a multilayer film according to embodiments of the present disclosure.

Referring to FIG. 1, the aqueous dispersion liquid may be applied to a substrate and then dried to form a coating film 10. The substrate may include a paper sheet, a resin film, or a metal foil, etc.

In an embodiment, another layer may be laminated on at least one surface of the coating film 10 to form a multilayer film 100. For example, an upper layer 20 may be laminated on an upper surface of the coating film 10, and a lower layer 30 may be laminated on a lower surface to form the multilayer film 100. The other layer may include a polymer film layer and a metal thin film layer.

For example, the upper layer 20 may be a polymer film layer, and the lower layer 30 may be a metal thin film layer. For example, a polyolefin layer may be adhered to one surface of the coating film 10, and an aluminum layer may be adhered to the other surface of the coating film 10.

In an embodiment, both the upper layer 20 and the lower layer 30 may be metal thin film layers. In an embodiment, both the upper layer 20 and the lower layer 30 may be polymer film layers.

The coating film 10 or the multilayer film 100 may be provided as a food packaging material or a food coating material, for example.

The embodiments of the present disclosure described above include the following aspects, and can be implemented through at least one of the following aspects.

According to the first aspect of an aqueous dispersion composition includes a first ethylene-based copolymer having a melting temperature of 84°C or higher; and a second ethylene-based copolymer having a melting temperature of less than 80°C, wherein a content of the second ethylene-based copolymer is 70 wt% to 90 wt% based on a total weight of the first ethylene-based copolymer and the second ethylene-based copolymer, and a total content of the first ethylene-based copolymer and the second ethylene-based copolymer is 50 wt% or more based on a total solid content weight of the aqueous dispersion composition.

In the first aspect, according to the second aspect of the aqueous dispersion composition, the first ethylene-based copolymer may include an ethylene-(meth)acrylic acid copolymer or an ethylene-maleic anhydride-alkylacrylate copolymer.

In the second aspect, according to the third aspect of the aqueous dispersion composition, a ratio of (meth)acrylic acid or maleic anhydride in the first ethylene-based copolymer may be 10 wt% or less based on a total weight of the first ethylene-based copolymer.

In anyone of the first aspect to the third aspect, according to the fourth aspect of the aqueous dispersion composition, the second ethylene-based copolymer may include an ethylene-(meth)acrylic acid copolymer.

In the fourth aspect, according to the fifth aspect of the aqueous dispersion composition, a ratio of (meth)acrylic acid in the second ethylene-based copolymer may be 19 wt% or more based on a total weight of the second ethylene-based copolymer.

In anyone of the first aspect to the fifth aspect, according to the sixth aspect of the aqueous dispersion composition, the first ethylene-based copolymer may have a melting temperature of 90°C to 110°C which is measured by differential scanning calorimeter (DSC).

In anyone of the first aspect to the sixth aspect, according to the seventh aspect of the aqueous dispersion composition, the second ethylene-based copolymer may have a melting temperature of 65°C or more and less than 80°C which is measured by differential scanning calorimeter (DSC).

In anyone of the first aspect to the seventh aspect, according to the eighth aspect of the aqueous dispersion composition, the first ethylene-based copolymer may have a melt flow index (MFI) of 5 g/10 min to 250 g/10 min which is measured under conditions of 190°C and 2.16 kg.

In anyone of the first aspect to the eighth aspect, according to the ninth aspect of the aqueous dispersion composition, the second ethylene-based copolymer may have a melt flow index (MFI) of 250 g/10 min to 1,500 g/10 min which is measured under conditions of 190°C and 2.16 kg.

In anyone of the first aspect to the ninth aspect, according to the tenth aspect of the aqueous dispersion composition, a density of the second ethylene-based copolymer may be greater than a density of the first ethylene-based copolymer. Preferably, the density of the first ethylene-based copolymer may be 0.920 $g/cm^3$ to 0.940 $g/cm^3$ or 0.930 $g/cm^3$ to 0.938 $g/cm^3$ and the density of the second ethylene-based copolymer may be 0.950 $g/cm^3$ to 0.960 $g/cm^3$ or 0.955 $g/cm^3$ to 0.959 $g/cm^3$.

In anyone of the first aspect to the tenth aspect, according to the eleventh aspect of the aqueous dispersion composition, a weight average molecular weight of the first ethylene-based copolymer may be greater than a weight average molecular weight of the second ethylene-based copolymer. Preferably, the first ethylene-based copolymer may have a weight average molecular weight of 25,000 to 55,000 or 35,000 to 45,000 and the second ethylene-based copolymer may have a weight average molecular weight of 15,000 to 45,000 or 25,000 to 35,000.

In anyone of the first aspect to the eleventh aspect, according to the twelfth aspect of the aqueous dispersion composition may further include a neutralizing agent and an aqueous dispersion medium.

In the twelfth aspect, according to the thirteenth aspect of the aqueous dispersion composition, the neutralizing agent may include at least one of an organic amine, $NR_4OH$, KOH, NaOH, CsOH and LiOH.

In anyone of the first aspect to the thirteenth aspect, according to the fourteenth aspect of the aqueous dispersion composition may include a solid content of 10% by weight to 30% by weight and/or may have a viscosity of 100 cP to 10,000 cP at 25°C.

According to the fifteenth aspect of the use of the aqueous dispersion composition of anyone of the first aspect to the fourteenth aspect for forming a coating film (10), the aqueous dispersion composition may be applied to a substrate and then dried to form the coating film (10).

Hereinafter, experimental examples including specific examples and comparative examples are proposed to facilitate understanding of the embodiments of the present disclosure.

## Examples and Comparative Examples

### (1) Preparation of aqueous dispersion composition

A 3000 ml glass double jacket (autoclave) vessel was filled with 860.1 g of water. As described in Table 1, the first ethylene-based copolymer and the second ethylene-based copolymer were dry-blended, and 250 g of a copolymer mixture (solid content 25%) was added into the vessel. The first ethylene-based copolymer and the second ethylene-based copolymer were each formed by polymerizing the monomers listed in Table 2 below.

An amount of 33 g of triethylamine (TEA) (based on neutralization degree 60%) as a neutralizing agent was added into the vessel, and 250 g of ethanol was added thereto to adjust the reaction speed and viscosity.

After closing the above glass double jacket vessel, the vessel was heated to 130°C while continuing to stir at a speed of 300 rpm. After reaction at 130°C for 2 hours, the vessel was heated to 60°C and then cooled, followed by filtration to remove the undispersed components.

TABLE 1

| Item | First ethylene-based copolymer | | Second ethylene-based copolymer | |
|---|---|---|---|---|
| | Type | Content (wt parts) | Type | Content (wt parts) |
| Example1 | L8200 | 1 | 5980i | 9 |
| Example2 | L8200 | 2 | 5980i | 8 |
| Examples | L8200 | 3 | 5980i | 7 |
| Comparative example1 | L8200 | - | 5980i | 10 |
| Comparative example2 | L8200 | 10 | 5980i | - |

### (2) Measurement of physical properties of ethylene-based copolymer

#### 1) Acrylic acid content (AA%)/maleic anhydride content (MAH%) measurement method

The acidic monomer content (AA%) or maleic anhydride content (MAH%) in the ethylene-based copolymer was measured using Fourier transform infrared spectroscopy. Deuterated triglycine sulfate was used as a detector, and values were calculated using the ResolutionPro™ software (Agilent).

Specifically, 120 mg of pellet-shaped ethylene-based copolymer sample was pressed in a hydraulic hot press (130°C) for 30 seconds to prepare a 50 $\mu$m sheet. After measuring the background spectrum, the sample fabricated in the form of a sheet was fixed in a center of a film holder through which IR beams passed. Measurements were performed in a transmission mode with a resolution of 4 cm$^{-1}$ and a repeat measurement number of 32 scans.

Three standard samples with known acrylic acid content were pretreated in the same manner as the measurement sample, and a calibration equation of a linear equation of C-O peak integral value for the acrylic acid content was calculated. Thereafter, the C-O peak integral value of the measurement sample was substituted into the calibration curve to calculate the acidic monomer content (%).

#### 2) Melting temperature (Tm) measurement method

The melting temperature was measured using a differential scanning calorimeter (device name: DSC822e, Mettler Toledo).

Specifically, 6 mg of ethylene-based copolymer sample in a pellet state was put into an aluminum crucible and covered with a lid including a pinhole.

While supplying nitrogen as a purge gas at a flow rate of 50 ml/min, the temperature was increased in a range of -50°C to 200°C at a rate of 10°C/min (a first temperature increase section) and then isothermally maintained at 200°C for 1 minute. Thereafter, the sample was cooled from 200°C to -50°C at a rate of 5°C/min, followed by crystallizing the same. In a second temperature increase section, the temperature was changed in the range of -50°C to 200°C at a rate of 10°C/min, and the highest point of the melting peak occurring in the second temperature increase section was measured as the melting temperature (Tm).

#### 3) Melt flow index (MFI) measurement method

The melt flow index (MFI) was measured according to the ASTM D1238 method. In this method, the measurement temperature is set to be 125°C and the weight of a balancing weight is set to be 2.16 kg. The melt flow index (MFI) under conditions of the measurement temperature of 190°C and the weight of the balancing weight of 2.16 kg was calculated using a 20-fold correlation of the values measured according to the ASTM D1238 method (125°C/2.16 kg).

4) Measurement of weight average molecular weight (Mw)

The weight average molecular weight was measured using gel permeation chromatography (PL GPC220, Agilent) and a polystyrene standard material.

Specifically, 200 $\mu$l of the ethylene-based copolymer sample was injected into a GPC system set at a temperature of 160°C and a GPC flow rate of 1 mL/min. Three columns (Agilent, PLgel Olexis 7.5 x 300 mm, 13 $\mu$m) and one guard column (Agilent, PLgel Olexis 7.5 x 50 mm, 13 $\mu$m) were connected to the GPC system.

Measurement results are shown together in Table 2 below.

TABLE 2

| Item | Composition of monomer | Tm (°C) | AA%/ MAH% (wt%) | MFI (g/10min) | Mw |
|------|------------------------|---------|------------------|----------------|--------|
| L8200 | Ethylene /MAH/EA | 100 | 2.8 | 200 | 42,000 |
| 5980i | Ethylene/AA | 77 | 20.5 | 300 | 33,000 |

In Table 2 above, AA is acrylic acid, MAH is maleic anhydride, and EA is ethyl acrylate.

In Table 2 above, the acidic monomer content (MAH%) of L8200 was 2.8 wt%, and the EA content (EA%) was 6.5 wt%. The acidic monomer content (AA%) of 5980i was 20.5%.

The density of 5980i measured according to the ASTM D792 method was 0.958 g/cm$^3$, and the Vicat softening temperature of 5980i measured according to ASTM D1525 method was 42°C.

**Experimental Example**

1) Evaluation of water resistance

The aqueous dispersion composition was coated on a paper substrate and dried at 150°C for 5 minutes to obtain a specimen. The specimen was fabricated as a circular sample having an area of 100 cm$^2$ according to ISO 532. After fixing the sample to a circular mold, 100 ml of boiling water was poured on the sample, and then left for 10 minutes. A difference (absorption amount) between a weight of the sample before evaluation (dry mass) and a weight of the sample after evaluation (wet mass) was measured, and the water resistance (A) was evaluated using the following calculation equation.

$$A = (m_2 - m_1) \times F$$

$m_1$: Dry mass (g)
$m_2$: Wet mass (g)
F: 10,000/test area (100 cm$^2$)

The A value of each copolymer was measured repeatedly multiple times, and if the measured A values were less than 5 g/m$^2$, they are indicated as "<5" in Table 3 below. When the measured A value was distributed between 5 g/m$^2$ to 20 g/m$^2$, it is indicated as "5 - 20" in Table 3 below.

2) Evaluation of static friction coefficient and dynamic friction coefficient

The aqueous dispersion composition was applied to a paper substrate and dried at 150°C for 5 minutes to obtain a specimen.

The friction coefficient of the specimen was measured using a friction coefficient measuring device (Plane Surface Friction Tester, TOYOSEIKI). Specifically, the specimen was closely fixed to a 60 mm $\times$ 60 mm square plate to prepare a moving friction surface. The opposite side of the moving friction surface was fixed to a glass substrate, and then the two sides were rubbed with a 500 g load and at a speed of 150 mm/min to measure the static friction coefficient and dynamic friction coefficient.

Measurement results are shown in Table 3 below.

TABLE 3

| Item | water resistance (g/m$^2$) | Static friction coefficient ($\mu_S$) | Dynamic friction coefficient ($\mu_D$) |
|---|---|---|---|
| Example1 | <5 | 0.58 | 0.44 |
| Example2 | <5 | 0.45 | 0.44 |
| Examples | <5 | 0.27 | 0.26 |
| Comparative example1 | <5 | 1.16 | 0.71 |
| Comparative example2 | 5-20 | 0.36 | 0.36 |

Referring to Table 3, in the case of the aqueous dispersion compositions of the examples, the DSC evaluation, the water resistance, static friction coefficient, and dynamic friction coefficient were improved compared to the aqueous dispersion compositions of the comparative examples.

In Comparative Example 1 where the aqueous dispersion composition included only the second ethylene-based copolymer as the ethylene-based copolymer, the static friction coefficient and dynamic friction coefficient of the specimen obtained from the aqueous dispersion composition were increased compared to the examples.

In Comparative Example 2 where the aqueous dispersion composition included only the first ethylene-based copolymer as the ethylene-based copolymer, the water resistance of the specimen obtained from the aqueous dispersion composition was decreased compared to the examples.

Description of Reference Numerals

100: Multilayer film
10: Coating film
20: Upper layer
30: Lower layer

**Claims**

1.  An aqueous dispersion composition comprising:

    a first ethylene-based copolymer having a melting temperature of 84°C or higher; and
    a second ethylene-based copolymer having a melting temperature of less than 80°C,
    wherein a content of the second ethylene-based copolymer is 70 wt% to 90 wt% based on a total weight of the first ethylene-based copolymer and the second ethylene-based copolymer, and
    a total content of the first ethylene-based copolymer and the second ethylene-based copolymer is 50 wt% or more based on a total solid content weight of the aqueous dispersion composition.

2.  The aqueous dispersion composition according to claim 1, wherein the first ethylene-based copolymer comprises an ethylene-(meth)acrylic acid copolymer or an ethylene-maleic anhydride-alkylacrylate copolymer.

3.  The aqueous dispersion composition according to claim 2, wherein a ratio of (meth)acrylic acid or maleic anhydride in the first ethylene-based copolymer is 10 wt% or less based on a total weight of the first ethylene-based copolymer.

4.  The aqueous dispersion composition according to anyone of claims 1 to 3, wherein the second ethylene-based copolymer comprises an ethylene-(meth)acrylic acid copolymer.

5.  The aqueous dispersion composition according to claim 4, wherein a ratio of (meth)acrylic acid in the second ethylene-based copolymer is 19 wt% or more based on a total weight of the second ethylene-based copolymer.

6.  The aqueous dispersion composition according to anyone of claims 1 to 5, wherein the first ethylene-based copolymer has a melting temperature of 90°C to 110°C which is measured by differential scanning calorimeter (DSC).

7.  The aqueous dispersion composition according to anyone of claims 1 to 6, wherein the second ethylene-based copolymer has a melting temperature of 65°C or more and less than 80°C which is measured by differential scanning calorimeter (DSC).

8. The aqueous dispersion composition according to anyone of claims 1 to 7, wherein the first ethylene-based copolymer has a melt flow index (MFI) of 5 g/10 min to 250 g/10 min which is measured under conditions of 190°C and 2.16 kg.

9. The aqueous dispersion composition according to anyone of claims 1 to 8, wherein the second ethylene-based copolymer has a melt flow index (MFI) of 250 g/10 min to 1,500 g/10 min which is measured under conditions of 190°C and 2.16 kg.

10. The aqueous dispersion composition according to anyone of claims 1 to 9, wherein a density of the second ethylene-based copolymer is greater than a density of the first ethylene-based copolymer, wherein preferably the density of the first ethylene-based copolymer may be 0.920 g/cm$^3$ to 0.940 g/cm$^3$ or 0.930 g/cm$^3$ to 0.938 g/cm$^3$ and the density of the second ethylene-based copolymer may be 0.950 g/cm$^3$ to 0.960 g/cm$^3$ or 0.955 g/cm$^3$ to 0.959 g/cm$^3$.

11. The aqueous dispersion composition according to anyone of claims 1 to 10, wherein a weight average molecular weight of the first ethylene-based copolymer is greater than a weight average molecular weight of the second ethylene-based copolymer, wherein preferably the first ethylene-based copolymer has a weight average molecular weight of 25,000 to 55,000 or 35,000 to 45,000 and the second ethylene-based copolymer has a weight average molecular weight of 15,000 to 45,000 or 25,000 to 35,000.

12. The aqueous dispersion composition according to anyone of claims 1 to 11, further comprising a neutralizing agent and an aqueous dispersion medium.

13. The aqueous dispersion composition according to claim 12, wherein the neutralizing agent comprises at least one of an organic amine, $NH_4OH$, KOH, NaOH, CsOH and LiOH.

14. The aqueous dispersion composition according to anyone of claims 1 to 13, wherein the aqueous dispersion composition include a solid content of 10% by weight to 30% by weight and/or has a viscosity of 100 cP to 10,000 cP at 25°C.

15. Use of the aqueous dispersion composition of any one of clams 1 to 14 for forming a coating film (10), wherein the aqueous dispersion composition is applied to a substrate and then dried to form the coating film (10).

FIG. 1

100

20
10
30

Europäisches
Patentamt

European
Patent Office

Office européen
des brevets

# EUROPEAN SEARCH REPORT

**Application Number**

EP 25 15 1093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 667 818 B2 (SK INNOVATION CO LTD [KR]; SK GLOBAL CHEMICAL CO LTD [KR] ET AL.) 6 June 2023 (2023-06-06) * table 1 * ----- | 1-15 | INV. C08L23/0869 C09D123/08 |
| A | US 2022/235228 A1 (WATANABE KENTARO [JP]) 28 July 2022 (2022-07-28) * table 3-4, par. 115 * ----- | 1-15 | |

**TECHNICAL FIELDS SEARCHED (IPC)**

C08L
C09D

The present search report has been drawn up for all claims

| Place of search | Date of completion of the search | Examiner |
|---|---|---|
| Munich | 5 May 2025 | Ritter, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1093

This annex lists the patent family members relating to the patent documents cited in the above-mentioned European search report.
The members are as contained in the European Patent Office EDP file on
The European Patent Office is in no way liable for these particulars which are merely given for the purpose of information.

05-05-2025

| Patent document cited in search report | | Publication date | Patent family member(s) | | Publication date |
|---|---|---|---|---|---|
| US 11667818 | B2 | 06-06-2023 | CN | 113801257 A | 17-12-2021 |
| | | | EP | 3922651 A1 | 15-12-2021 |
| | | | JP | 2021195545 A | 27-12-2021 |
| | | | US | 2021388243 A1 | 16-12-2021 |
| US 2022235228 | A1 | 28-07-2022 | CN | 114806315 A | 29-07-2022 |
| | | | EP | 4036155 A1 | 03-08-2022 |
| | | | JP | 7474204 B2 | 24-04-2024 |
| | | | JP | 2022115399 A | 09-08-2022 |
| | | | KR | 20220109327 A | 04-08-2022 |
| | | | TW | 202239882 A | 16-10-2022 |
| | | | US | 2022235228 A1 | 28-07-2022 |
| | | | US | 2024240031 A1 | 18-07-2024 |

EPO FORM P0459

For more details about this annex : see Official Journal of the European Patent Office, No. 12/82